# EUROPÄISCHE PATENTANMELDUNG

(11) **EP 3 879 403 A1**
(43) Veröffentlichungstag der Anmeldung: **15.09.2021**
(21) Anmeldenummer: 21155674.1
(22) Anmeldetag: 08.02.2021
(51) Int. Cl.: G06F 9/54, G05B 19/418

(54) **ARBEITSPLATZ MIT ARBEITSPLAN FÜR DATENVERARBEITENDE WERKZEUGE**

(30) Priorität: 12.03.2020 DE 102020203164
(71) Anmelder: Robert Bosch GmbH, 70442 Stuttgart (DE)
(72) Erfinder: Nowak, Rene, 70469 Stuttgart (DE)

(57) **Zusammenfassung**

Die Erfindung betrifft ein Verfahren für einen Arbeitsplatz (10), wobei der Arbeitsplatz (10) wenigstens eine Datenanzeigeeinheit (50), ein Arbeitsbereich und wenigstens ein erstes Werkzeug (51) mit einer zweiten Datenverarbeitungseinheit (62; 62') umfasst, wobei dem Arbeitsplatz (10) eine von der zweiten Datenverarbeitungseinheit (62; 62') verschiedene erste Datenverarbeitungseinheit (61) zugeordnet ist, wobei in der ersten Datenverarbeitungseinheit (61) ein Arbeitsplan (70) mit mehreren Arbeitsschritten gespeichert ist, wobei diese Arbeitsschritte in einer vorgebbaren Reihenfolge ausgeführt werden, wobei der Arbeitsplan (70) wenigstens einen Arbeitsschritt erster Art umfasst, mit welchem eine für einen Menschen verständliche Arbeitsanweisung auf der wenigstens einen Datenanzeigeeinheit angezeigt wird.

Erfindungsgemäß umfasst der Arbeitsplan (70) wenigstens einen Arbeitsschritt zweiter Art, bei dessen Ausführung eine in dem betreffenden Arbeitsschritt zweiter Art gespeicherte Nachricht von der ersten Datenverarbeitungseinheit (61) an die zweite Datenverarbeitungseinheit (62; 62') übertragen wird.

## Beschreibung

Die Erfindung betrifft ein Verfahren für einen Arbeitsplatz gemäß dem Oberbegriff von Anspruch 1 und einen entsprechenden Arbeitsplatz.

Aus der DE 10 2017 217 834 A1 ist ein Arbeitsplatz bekannt. Dieser umfasst einen Arbeitsplan mit mehreren Arbeitsschritten, welcher in einer ersten Datenverarbeitungseinheit gespeichert ist. Beim Abarbeiten des Arbeitsplans werden unter anderem für einen Menschen verständliche Arbeitsanweisungen auf einem Bildschirm angezeigt.

Aus dem PDF-Dokument, welches am 26.02.2020 unter der Internetadresse https://www.boschrexroth.com/various/utilities/mediadirectory/download/index.jsp?ob ject_nr=3608870A47 DE abrufbar war, ist darüber hinaus ein erstes Werkzeug in Form eines Funkakkuschraubers bekannt. Dieses erste Werkzeug hat eine zweite Datenverarbeitungsvorrichtung, welche eine komplexe Datenkommunikation ermöglicht. Vergleichbare erste Werkzeuge anderer Hersteller oder erste Werkzeuge mit anderer Funktionalität ermöglichen eine ähnliche, aber inkompatible Datenkommunikation.

Ein Vorteil der vorliegenden Erfindung besteht darin, dass die genannte Datenkommunikation im Rahmen des elektronischen Arbeitsplans nutzbar gemacht wird. Der erfindungsgemäße Arbeitsschritt zweiter Art ist dabei unabhängig vom Typ des ersten Werkzeugs, wobei allein der Nachrichteninhalt an die gewünschte Funktion anzupassen ist.

Gemäß Anspruch 1 wird vorgeschlagen, dass der Arbeitsplan wenigstens einen Arbeitsschritt zweiter Art umfasst, bei dessen Ausführung eine in dem betreffenden Arbeitsschritt zweiter Art gespeicherte Nachricht von der ersten Datenverarbeitungseinheit an die zweite Datenverarbeitungseinheit übertragen wird. Der Arbeitsplatz kann wenigstens ein zweites Werkzeug umfassen, welches keine Datenverarbeitungseinheit umfasst, beispielsweise einen Schraubendreher, einen Hammer und ähnliche rein mechanische Werkzeuge. Bei dem ersten Werkzeug kann es sich beispielsweise um einen elektrisch angetriebenen Schrauber handeln. Die Datenanzeigeeinheit kann ein Bildschirm sein, wobei das angezeigte Bild beispielsweise mittels eines Webbrowsers erzeugt wird. Die Datenanzeigeeinheit kann einen Oberflächenabschnitt der Arbeitsbereich umfassen, auf welchem mit einer Bildprojektionsvorrichtung ein Bild projiziert wird, wobei dieses Bild auch Text enthalten kann. Die Dateianzeigeeinheit kann eine Datenbrille sein, die von einem Menschen getragen wird, der an dem Arbeitsplatz arbeitet, wobei die Datenbrille in einen Teil des Sichtfelds des Menschen ein Bild einblendet. Man spricht in diesem Zusammenhang auch von Augmented Reality. Die wenigstens eine Datenanzeigeeinheit ist vorzugsweise zumindest mittelbar an die erste Datenverarbeitungseinheit angeschlossen.

Bei der vorgebbaren Reihenfolge, in welcher die Arbeitsschritte ausgeführt werden, kann es sich um eine fest vorgegebene rein sequenzielle Reihenfolge der Arbeitsschritte handeln. Es ist aber auch denkbar, dass der Arbeitsplan wenigstens einen Arbeitsschritt dritter Art umfasst, welcher abhängig von einer Bedingung einen Arbeitsschritt des Arbeitsplans auswählt, der als nächstes zur Ausführung gebracht wird. Die Bedingung kann beispielsweise von einer Dateneingabe des Bedieners des Arbeitsplatzes oder vom Inhalt der unten angesprochenen Rück-Nachricht abhängig sein. Der Arbeitsplan ist vorzugsweise mittels einer Webbrowser-basierten Benutzerschnittstelle erstellbar, die höchst vorzugsweise auf der wenigstens einen Datenanzeigeeinheit darstellbar ist bzw. dargestellt wird.

Unter einem Werkzeug sollen Vorrichtungen aller Art verstanden werden, mit denen das zu bearbeitende Werkstück bearbeitet werden kann. Weiter sollen Vorrichtungen umfasst sein, mit denen Daten, beispielsweise Messdaten, jedweder Art betreffend das zu bearbeitende Werkstück erfasst und/oder verarbeitet werden können. Bei dem Arbeitsbereich kann es sich um eine Arbeitsfläche, insbesondere um eine ebene Tischoberfläche handeln. Es kann sich aber auch um ein bewegliches Fließband handeln an dem ein Werkstück montiert wird. Es ist denkbar, dass der Arbeitsplan Arbeitsschritte umfasst, die gleichzeitig einen Arbeitsschritt erster Art als auch einen Arbeitsschritt zweiter Art bilden. Die beiden entsprechenden Funktionalitäten werden dann gleichzeitig ausgeführt.

In den abhängigen Ansprüchen sind vorteilhafte Weiterbildungen und Verbesserungen der Erfindung angegeben.

Es kann vorgesehen sein, dass zumindest einem ersten Werkzeug eine dritte Datenverarbeitungseinheit zugeordnet ist, wobei die dritte Datenverarbeitungseinheit mit der ersten Datenverarbeitungseinheit über ein verbindungsorientiertes erstes Datentransportprotokoll verbindbar ist, wobei die Nachricht mittels des ersten Datentransportprotokolls von der ersten Datenverarbeitungseinheit an die dritte Datenverarbeitungseinheit übertragen wird, wenn der der Nachricht zugeordnete Arbeitsschritt zweiter Art ausgeführt wird, wobei die zweite Datenverarbeitungseinheit über ein zweites Datentransportprotokoll mit der dritten Datenverarbeitungseinheit verbindbar ist. Unter dem ersten bzw. dem zweiten Datentransportprotokoll soll insbesondere ein Protokoll gemäß der Transport-Schicht des OSI-Schichtenmodells (https://de.wikipedia.org/wiki/OSI-Modell) verstanden werden. Bei dem ersten Datentransportprotokoll kann es sich beispielsweise um das TCP-Protokoll (https://de.wikipedia.org/wiki/Transmission_Control Protocol) handeln. Bei dem zweiten Datentransportprotokoll kann es sich beispielsweise um das auf dem CAN-Bus (https://de.wikipedia.org/wiki/Controller Area Network) verwendete Datentransportprotokoll handeln. Das zweite Datentransportprotokoll ist vorzugsweise verbindungsorientiert ausgestaltet. Mit der dritten Datenverarbeitungseinheit kann erreicht werden, dass der erfindungsgemäße Arbeitsplan für beliebige erste Werkzeuge genutzt werden kann, gleich, welche Datenkommunikationsschnittstelle diese haben. An der ersten Datenverarbeitungseinheit sind mit Ausnahme der Anpassung des Inhalts der Nachricht keine Änderungen notwendig.

Es kann vorgesehen sein, dass das erste Datentransportprotokoll verschieden vom zweiten Datentransportprotokoll ist. Damit ist eine maximale Vielfalt an ersten Werkzeugen mit dem erfindungsgemäßen Arbeitsplatz verwendbar.

Es kann vorgesehen sein, dass mehrere unterschiedliche erste Werkzeuge vorgesehen sind, die sich zumindest hinsichtlich des mit dem zweiten Datentransportprotokoll übertragenen zweiten Nachrichtenformats unterscheiden, wobei das mit dem ersten Datentransportprotokoll verwendete erste Nachrichtenformat bei allen ersten Werkzeugen identisch und/oder wählbar ist. Bei dem ersten Nachrichtenformat kann es sich beispielsweise um das XML-Format (https://de.wikipedia.org/wiki/Extensible Markup Language) oder das JSON-Format (https://de.wikipedia.org/wiki/JavaScript_Object Notation) handeln. Es kann sich um das innerhalb des MQTT-Protokolls (https://de.wikipedia.org/wiki/MQTT) verwendete Nachrichtenformat handeln. Wie nachfolgend noch erläutert wird, unterliegt das erste Nachrichtenform vorzugsweise einigen Einschränkungen, damit die entsprechende Nachricht auf einfache Weise in den Arbeitsplan eingetragen werden kann, insbesondere über eine Webbrowser-basierte Benutzerschnittstelle. Durch die vorstehende Ausgestaltung der Erfindung kann das erste Werkzeug dennoch zweite Nachrichtenformate verwenden, die die vorstehende Einschränkung nicht erfüllen.

Es kann vorgesehen sein, dass das erste Nachrichtenformat ein reines Textformat ist, wobei der entsprechende Text als Nachricht im betreffenden Arbeitsschritt zweiter Art gespeichert ist. Hiermit kann auf einfache Weise die Wählbarkeit des ersten Nachrichtenformats erreicht werden. Das XML- und das JSON-Format sind reine Textformate. Die entsprechenden Nachrichten können mit einer üblichen Tastatur in eine Webbrowser-basierte Benutzerschnittstelle eingegeben werden. Das erste Nachrichtenformat ist vorzugsweise so ausgelegt, dass nur vergleichsweise kurze Nachrichten zur Anwendung kommen.

Es kann vorgesehen sein, dass die dritte Datenverarbeitungsvorrichtung auf den Eingang einer Nachricht in einem ersten Nachrichtenformat, eine Nachricht in einem zweiten Nachrichtenformat erzeugt, welche im Wesentlichen einen äquivalenten Nachrichteninhalt wie die genannte Nachricht im ersten Nachrichtenformat hat, wobei sie die genannte Nachricht im zweiten Nachrichtenformat mittels des zweiten Datentransportprotokolls an die zugeordnete zweite Datenverarbeitungseinheit sendet. Unter äquivalentem Nachrichteninhalt soll verstanden werden, dass die Bedeutung der Nachricht im Wesentlichen unverändert bleiben soll, ähnlich wie bei einer Übersetzung von der Deutschen Sprache in die Englische Sprache. Die Nachricht im zweiten Nachrichtenformat kann zusätzlich Informationen enthalten, die keine Entsprechung in der Nachricht im ersten Nachrichtenformat haben.

Es kann vorgesehen sein, dass die im Arbeitsschritt zweiter Art gespeicherte Information die Arbeitsweise des betreffenden ersten Werkzeugs bei der Durchführung des dem genannten Arbeitsschritt zweiter Art zugeordneten Arbeitsvorgangs beeinflusst. Wenn das erste Werkzeug ein elektrisch betriebener Schrauber ist, kann die genannte Information beispielsweise das Schraub-Drehmoment sein, bei welchem der Schrauber den Schraubvorgang selbständig beendet. Die Information kann auch einen Grenzdrehmoment und einen Drehwinkel umfassen, wobei der Schrauber nach Erreichen des genannten Grenzdrehmoments noch den genannten Drehwinkel ausführt. Wenn das erste Werkzeug ein Lötwerkzeug ist, kann die genannte Information die Arbeitstemperatur der Lötspitze sein. Wenn das erste Werkzeug ein Schweißwerkzeug ist, kann die genannte Information die für eine Punktschweißung aufzuwendende Schweißenergie sein.

Es kann vorgesehen sein, dass die zweite Datenverarbeitungseinheit nach Abschluss des einem Arbeitsschritt zweiter Art zugeordneten Arbeitsvorgangs wenigstens eine Rück-Nachricht im zweiten Nachrichtenformat mittels des zweiten Datentransportprotokolls an die zugeordnete dritte Datenverarbeitungseinheit sendet, wobei die dritte Datenverarbeitungseinheit auf den Eingang der genannten Rück-Nachricht im zweiten Nachrichtenformt eine Nachricht im ersten Nachrichtenformat erzeugt, welche im Wesentlichen einen äquivalenten Nachrichteninhalt wie die Rück-Nachricht im zweiten Nachrichtenformat hat, wobei sie die genannte Rück-Nachricht im ersten Nachrichtenformat mittels des ersten Datentransportprotokolls an die erste Datenverarbeitungseinheit sendet. Die Rück-Nachricht im ersten Nachrichtenformat kann dabei zusätzliche Daten enthalten, die in der Rück-Nachricht im ersten Nachrichtenformat keine Entsprechung finden. Wenn das erste Werkzeug ein elektrisch betriebener Schrauber ist, kann es sich bei dem Nachrichteninhalt der Rück-Nachricht um den gemessenen Verlauf des Schraubdrehmoments während des Schraubvorgangs handeln. Dieser Verlauf kann über die Schraubzeit und/oder den Schraubwinkel angegeben sein. Wenn das erste Werkzeug ein Schweißwerkzeug ist, kann es sich beim Nachrichteninhalt der Rück-Nachricht um den Verlauf des entsprechenden Schweißstroms handeln, welcher vorzugsweise über die Zeit angegeben ist. Diese Informationen werden von der ersten Datenverarbeitungseinheit vorzugsweise in einer Datenbank abgelegt, um den Arbeitsvorgang revisionssicher zu dokumentieren. Beim Inhalt der Rück-Nachricht kann es sich um eine Ja-Nein-Aussage darüber handeln, ob der zugeordnete Arbeitsvorgang erfolgreich durchgeführt wurde. Die letztgenannte Rück-Nachricht wird vorzugsweise im Rahmen eines Arbeitsschritts dritter Art genutzt, um den nachfolgenden Arbeitsschritt des Arbeitsplans auszuwählen. Falls mehrere Rück-Nachrichten Verwendung finden kann eine zeitlich erste Rück-Nachricht eine Ja-Nein-Aussage darüber enthalten, ob der betreffenden Arbeitsschritt erfolgreich ausgeführt wurde. Eine zeitlich spätere zweite Rück-Nachricht kann Messdaten über den durchgeführten Arbeitsschritt enthalten. Auf diese Weise kann schnell eine Rückmeldung über den Erfolg des Arbeitsschritt gegeben werden, so dass der Arbeitsplan fortgesetzt werden kann. Für die Aufbereitung der Messdaten oder anderer Prozessdaten bleibt genügend Bearbeitungszeit.

Es kann vorgesehen sein, dass die dritte Datenverarbeitungseinheit der Rück-Nachricht im ersten Nachrichtenformat eine Information hinzufügt, welche das erste Werkzeug eindeutig identifiziert, welches die zugeordnete Rück-Nachricht im zweiten Nachrichtenformat gesendet hat. Wenn mehrere erste Werkzeuge vorhanden sind, die vergleichbare Rück-Nachrichten senden, beispielsweise Ja-Nein-Aussagen, wird hierdurch eine sinnvolle Interpretation der Rück-Nachricht erst ermöglicht.

Es kann vorgesehen sein, dass die dritte Datenverarbeitungseinheit von einem Mikrocontroller gebildet wird, welcher Bestandteil des ersten Werkzeugs ist oder fest mit dem ersten Werkzeug verbunden ist. Damit kann die dritte Datenverarbeitungseinheit auf besonders platzsparende und kostengünstige Weise realisiert werden. Mit dieser Ausgestaltung ist es insbesondere möglich, bei einem beliebigen ersten Werkzeug die Kompatibilität mit dem erfindungsgemäßen Arbeitsplatz herbeizuführen, ohne dass in das erste Werkzeug selbst eingegriffen werden muss. Ein Eingriff in die erste Datenverarbeitungseinheit ist ebenfalls nicht erforderlich.

Es kann vorgesehen sein, dass der Datenaustausch zwischen der ersten und der dritten Datenverarbeitungseinheit drahtlos geschieht, wobei der Datenaustausch zwischen der dritten und der zweiten Datenverarbeitungseinheit drahtgebunden geschieht. Die genannte drahtlose Datenaustauschverbindung kann gemäß den Standards WLAN bzw. WiFi (https://de.wikipedia.org/wiki/IEEE 802.11), LTE (https://de.wikipedia.org/wiki/Long Term Evolution) oder 5G erfolgen. Das entsprechende erste Werkzeug wird in diesem Zusammenhang vorzugsweise über einen Akkumulator mit elektrischer Energie versorgt. Vorzugsweise versorgt dieser Akkumulator im Rahmen des genannten drahtgebundenen Datenaustauschs auch die dritte Datenverarbeitungseinheit mit Energie.

Gemäß den Ansprüchen 12 und 13 wird außerdem Schutz für einen Arbeitsplatz beansprucht, der dazu eingerichtet ist, das vorstehend erläuterte Verfahren durchzuführen. Die erste und/oder die wenigstens eine zweite und/oder die wenigstens eine dritte Datenverarbeitungseinheit umfassen vorzugsweise jeweils einen Digitalrechner, der höchstvorzugsweise gemäß dem erfindungsgemäßen Verfahren programmiert ist.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es zeigt:
- Fig. 1: eine perspektivische Darstellung eines erfindungsgemäßen Arbeitsplatzes;
- Fig. 2: ein Block-Diagramm des erfindungsgemäßen Arbeitsplatzes; und
- Fig. 3: eine grobschematische Darstellung des Arbeitsplans.

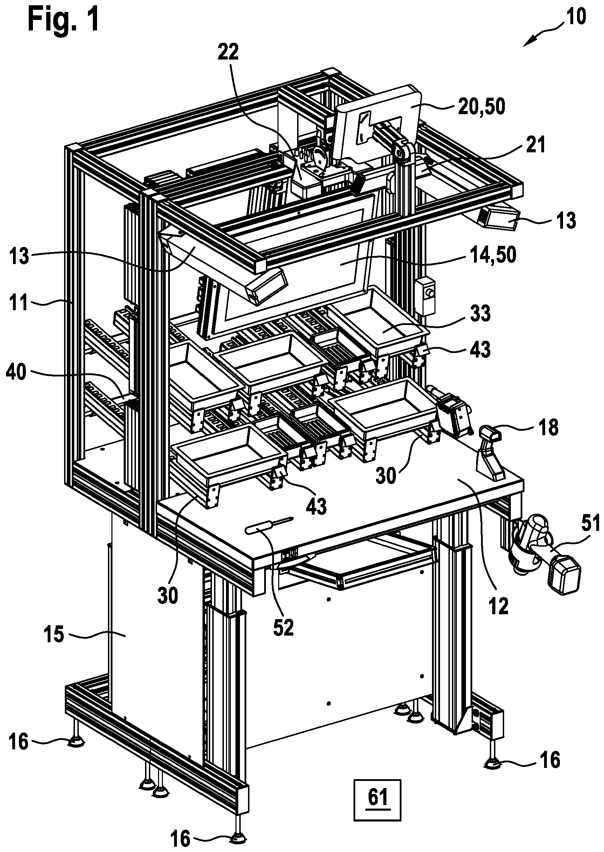

Fig. 1 zeigt eine perspektivische Darstellung eines erfindungsgemäßen Arbeitsplatzes 10. Auf dem Arbeitsplatz 10 sollen im Rahmen einer Serienfertigung Baugruppen aus Einzelteilen zusammengebaut werden, und zwar von einem Menschen per Hand. Der Arbeitsplatz ist aufgrund seiner einfachen Umrüstbarkeit aber auch für die Einzelanfertigung von Baugruppen verwendbar. Die Einzelteile werden in Materialbehältern 33 bereitgestellt, welche in Behälteraufnahmevorrichtungen 30 aufgenommen sind. Die Behälteraufnahmevorrichtungen 30 sind auf Halteprofilen 40 derart befestigt, dass ihre Position und/oder ihre Breite einstellbar sind, so dass eine in ergonomischer Hinsicht optimale Anordnung der Materialbehälter gewählt werden kann. Die Halteprofile 40 sind wiederum an einem Gestell 11 befestigt, welches vorliegenden aus Aluminium-Strangpressprofilen zusammengesetzt ist. An dem Gestell 11 ist außerdem ein Arbeitsbereich 12 angeordnet, der vorliegend von einer ebenen Platte mit konstanter Dicke gebildet wird. Auf dem Arbeitsbereich 12 wird die o.g. Baugruppe zusammengesetzt. Auf dem Arbeitsbereich 12 können Hilfsvorrichtungen angeordnet sein, in welcher die Baugruppe aufgenommen ist. Die Höhenlage des Arbeitsbereichs 12 ist verstellbar. Das Gestell 12 ist mit mehreren höhenverstellbaren Stellfüßen 16 versehen, so dass es auf einem vorzugsweise horizontalen Untergrund aufgestellt werden kann.

Oberhalb des Arbeitsbereichs 12 ist ein Bildschirm 14 angeordnet, welcher an eine erste Datenverarbeitungseinheit 61 angeschlossen ist. Bei der (grobschematisch dargestellten) ersten Datenverarbeitungseinheit 61 kann es sich um eine einzige Vorrichtung oder mehrere miteinander vernetzte Teilvorrichtungen handeln. Auf dem Bildschirm 14 werden, die Arbeitsschritte angezeigt, welche der Werker ausführen soll. Weiter ist oberhalb des Arbeitsbereichs 12 eine Bildprojektionsvorrichtung 20 angeordnet, welche vorzugsweise digital ansteuerbar ist, wobei sie beispielsweise nach dem LCD-, nach dem DLP- oder nach dem Laser-Prinzip arbeitet. Als Lichtquelle kommen vorzugsweise stromsparende und langlebige LED's zum Einsatz. Die Bildprojektionsvorrichtung 20 ist ebenfalls an die erste Datenverarbeitungseinheit 61 angeschlossen. Mit der Bildprojektionsvorrichtung 20 wird beispielsweise auf die Materialbehälter, aus denen im Rahmen des anstehenden Arbeitsschritts ein Einzelteil zu entnehmen ist, ein Bild projiziert. Die Behälteraufnahmevorrichtungen 30 sind hierfür jeweils mit einer Projektionsfläche 43 versehen. Das genannte Bild kann eine Zahl enthalten, welche die Anzahl der zu entnehmenden Teile angibt. Es kann beispielsweise einen grünen Hintergrund aufweisen, der dem Werker signalisiert, dass in diesen Materialbehälter zu greifen ist. Der farbliche Hintergrund kann pulsierend zwischen "voller Intensität" und "aus" ausgeführt sein, sodass die Aufmerksamkeit des Werkers verstärkt auf die richtige Position gelenkt wird. Auf die Projektionsflächen der Materialbehälter aus denen kein Teil zu entnehmen ist, kann beispielsweise ein Bild mit einem roten Hintergrund projiziert werden. Je nach Anzahl und Anordnungen der Behälteraufnahmevorrichtungen 30 sind mehrere Bildprojektionsvorrichtungen 20 erforderlich, um alle Projektionsflächen auszuleuchten.

Das Gestell 11 ist mit Leuchten 13 versehen, mit welchen der Arbeitsbereich 12 hell ausgeleuchtet werden kann, so dass der Werker ermüdungsfrei arbeiten kann. Die Bildprojektionsvorrichtung 20 kann in diesem Zusammenhang auch dazu genutzt werden, einzelne Bereiche des Arbeitsplatzes heller auszuleuchten, beispielsweise den Bereich in dem die zu bearbeitende Baugruppe angeordnet ist. Weiter kann die Bildprojektionsvorrichtung 20 dazu genutzt werden, die Stelle der zu bearbeitende Baugruppe anzuleuchten, an der das nächste Einzelteil eingebaut werden soll. Es ist auch denkbar, dass die Bildprojektionsvorrichtung 20 die Leuchten 13 vollständig ersetzt.

Die Bildprojektionsvorrichtung 20 hat in ihrem Inneren typischerweise eine einzige Bildvorlage, welche projiziert wird und welche beispielsweise von eine DLP- oder einem LCD-Chip gebildet wird. Diese eine Bildvorlage enthält in ggf. verzerrter Form alle Bilder, welche auf die Projektionsflächen projiziert werden sollen.

Oberhalb des Arbeitsbereichs ist eine erste und gewünschtenfalls eine zweite Positionserkennungsvorrichtung 21; 22 angeordnet. Mit diesen soll einerseits die räumliche Lage einer oder beider Hände des Werkers erfasst werden. Im einfachsten Fall wird jeweils nur der Ort eines Bezugspunkts der jeweiligen Hand erfasst. Es ist aber auch denkbar, die Drehlage der betreffenden Hand zu erfassen. Weiter soll mit der zweiten Positionserkennungsvorrichtung 22 die Position beispielsweise des ersten Werkzeuges 51, insbesondere eines elektrisch angetriebenen Handschraubers, ermittelt werden. Die Positionserkennung kann auf unterschiedliche Weise geschehen, beispielsweise können die Hand und/oder das Werkzeug 23 mit einem oder mehreren Ultraschallsendern versehen sein, die geeignete Schallsignale aussenden. Die entsprechende, vorliegend die zweite Positionserfassungsvorrichtung 22 misst die Zeit, welche die genannten Schallsignale zu mehreren, vorzugsweise drei Ultraschallempfängen benötigt. Hieraus kann der Ort der Ultraschallsender berechnet werden. Wenn insbesondere das Werkzeug mit mehreren Ultraschallsendern versehen ist, welche relativ zueinander ortsfest angeordnet sind, kann darüber hinaus die Drehlage des Werkzeugs im Raum ermittelt werden. Gleiches gilt für die Hand des Werkers. Mit Hilfe der so gewonnen Information kann beispielsweise ermittelt werden, ob ein auszuführender Arbeitsschritt des Arbeitsplans tatsächlich durchgeführt wurde. Wenn das der Fall ist kann automatisch auf den nächsten Schritt des Arbeitsplans gewechselt werden.

Die erste und/oder die zweite Positionserkennungsvorrichtung können optisch arbeiten, beispielsweise in der Art einer Stereokamera, wie dies aus der US 6 198 485 B1 oder der US 7 227 526 B1 bekannt ist. Die Positionserkennung kann durch Einsatz einer sogenannten Tiefenkamera weiter verbessert werden, wie beispielsweise aus der US 2009/228841 A1 bekannt. Dabei ist es auch möglich die Position der Hand des Werkes zu erkennen, ohne dass diese mit einer Markierung versehen werden muss. Die optische Positionserkennung ist genauer und zuverlässiger, wenn das betreffende Objekt mit einer oder mehreren stark reflektierenden Markierungen versehen ist.

Anzumerken ist, dass vorzugsweise alle Behälteraufnahmevorrichtungen 30 parallel zu einer vertikalen Bezugsebene 15 ausgerichtet sind. Die Bezugsebene 15 ist insbesondere parallel zur Richtung der Schwerkraft ausgerichtet. Typischerweise fällt sie wie in Fig. 1 dargestellt mit einer Seitenwand des Gestells 11 zusammen. Durch die genannte Ausrichtung der Behälteraufnahmevorrichtungen 30 ergeben sich für den Werker ergonomisch günstige Greifbewegungen, wenn er in einen Materialbehälter greift. Es versteht sich, dass mit dem Arbeitsplatz auch zweite Werkzeuge 52 verwendbar sind, die rein mechanisch arbeiten, beispielsweise ein Schraubdreher.

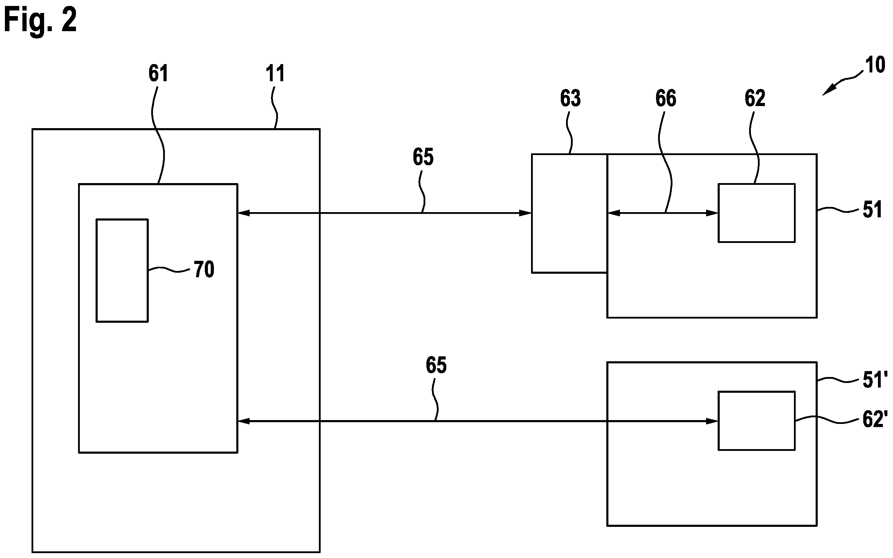

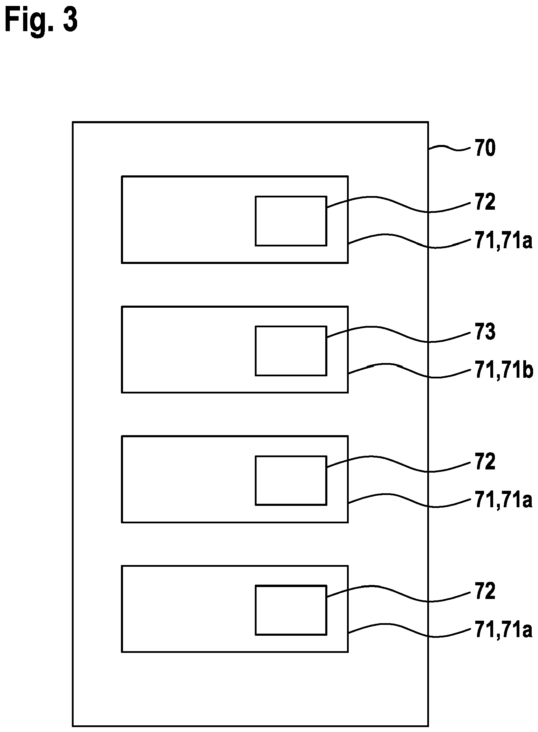

Fig. 2 zeigt ein Block-Diagramm des erfindungsgemäßen Arbeitsplatzes 10. Die erste Datenverarbeitungseinheit 61 ist zumindest teilweise am Gestell 11 angebracht. In der ersten Datenverarbeitungseinheit 61 ist ein Arbeitsplan 70 gespeichert, welcher mit Bezug auf Fig. 3 näher erläutert wird.

Das erste Werkzeug 51 ist beispielsweise in Form eines elektrisch betriebenen Schraubers ausgeführt, welcher über einen Akkumulator mit Energie versorgt wird. Das erste Werkzeug 51 umfasst eine zweite Datenverarbeitungseinheit 62, welche beispielsweise die Drehbewegung der Schraubspindel steuert, wobei sie vorzugsweise Messwerte des entsprechenden Drehwinkels und/oder das entsprechenden Drehmoments erfasst. An das erste Werkzeug 51 ist ein dritte Datenverarbeitungseinheit 63 angebaut.

Zwischen der ersten und der dritten Datenverarbeitungseinheit 61; 63 werden Daten gemäß einem ersten Datentransportprotokoll 65 ausgetauscht, bei dem es sich vorzugsweise um das TCP-Protokoll handelt. Zwischen der zweiten und der dritten Datenverarbeitungseinheit 62; 63 werden Daten gemäß einem zweiten Datentransportprotokoll ausgetauscht. Sofern dies drahtgebunden geschieht, kommt beispielsweise das dem CAN-Bus zugrundeliegende Datentransportprotokoll zur Anwendung.

Es kann ein erstes Werkzeug 51' vorhanden sein, welches eine zweite Datenverarbeitungseinheit 62' umfasst, die von vorne herein gemäß dem ersten Datentransportprotokoll Daten austauschen kann, wobei sie dabei das oben angesprochene erste Nachrichtenformat verwendet. Diese kann unmittelbar mit der ersten Datenverarbeitungseinheit 61 Daten austauschen.

Fig. 3 zeigt eine grobschematische Darstellung des Arbeitsplans 70. Der vorliegende Arbeitsplan 70 umfasst vier Arbeitsschritte 71, die in der dargestellten Reihen nacheinander bzw. sequentiell abgearbeitet werden. Der in Fig. 3 erste Arbeitsschritt ist ein Arbeitsschritt erster Art 71a. Die auf dem Bildschirm (Nr. 14 in Fig. 1) anzeigende Arbeitsanweisung 72 könnte beispielsweise in dem Text "Werkstück in die Haltevorrichtung einlegen" bestehen. Der Ausführung diese Arbeitsschritts kann dadurch bestätigt werden, dass der Werker eine Bestätigungstaste drückt. Es ist aber auch denkbar, dass an der genannten Haltevorrichtung ein Sensor angebracht ist, mit dem automatisiert erkannt wird, dass das Werkstück eingelegt ist.

Auf die Bestätigung hin schaltet die erste Datenverarbeitungsvorrichtung weiter zum in Fig. 3 zweiten Arbeitsschritt, bei dem es sich um einen erfindungsgemäßen Arbeitsschritt zweiter Art 71b handelt. Die dort gespeicherte Nachricht 73 könnte beispielsweise bewirken, dass der Schrauber bzw. das erste Werkzeug (Nr. 51 in Fig. 1) zur Betätigung freigegeben wird, wobei das Schraubdrehmoment auf einen vorgegebenen Wert eingestellt wird. Wenn die Nachricht erfolgreich übertragen wurde wird automatisiert zum in Fig. 3 dritten Arbeitsschritt 71 weitergeschaltet. Hierbei ist darauf hinzuweisen, dass vorzugsweise ein verbindungsorientiertes erstes Datentransportprotokoll zum Einsatz kommt. Dieses zeichnen sich unter anderem dadurch aus, dass der Sender eine Bestätigung darüber erhält, dass die zu übertragenden Daten beim Empfänger angekommen sind.

Beim in Fig. 3 dritten Arbeitsschritt handelt es sich wieder um einen Arbeitsschritt erster Art 71a. Die entsprechende Arbeitsanweisung 72 könnte einen Text und wenigstens ein Bild umfassen. Der Text könnte lauten: "Die vier im Bild rot markierten Schrauben mit dem Schrauber einschrauben". Das Bild könnte das Werkstück in der Haltvorrichtung aus Sicht des Werkers zeigen, wobei die zu montierenden Schrauben rot markiert sind. Der genannte Text und des genannte Bild werden vorzugsweise auf dem Bildschirm angezeigt. Die Arbeitsanweisung könnte ein weiteres Bild umfassen, welches mit der Bildprojektionsvorrichtung (Nr. 20 in Fig. 1) zur Anzeige gebracht wird. Durch Projektion dieses Bilds könnte die Projektionsfläche (Nr. 43 in Fig. 1) desjenigen Materialbehälters (Nr. 33 in Fig. 1) grün angestrahlt werden, in dem sich die zu montierenden Schrauben befinden. Die verbleiben Projektionsflächen (Nr. 43 in Fig. 1) werden durch diese Bild vorzugsweise rot oder gar nicht angestrahlt.

Wie oben bereits erläutert kann auch eine Rück-Nachricht vom ersten Werkzeug zur ersten Steuervorrichtung übertragen werden. Diese könnte beispielsweise die Information "Verschraubung erfolgreich durchgeführt: JA" enthalten. Sobald vier derartige Rückmeldungen entsprechend den vier im Beispiel zu montierenden Schrauben vorliegen, wird automatisiert zum in Fig. 3 vierten Arbeitsschritt 71 des Arbeitsplans weitergeschaltet. Im Rahmen dieses Arbeitsschritts erster Art 71a wird beispielsweise eine Arbeitsanweisung 72 in Form des Textes "Werkstück aus der Haltevorrichtung" entnehmen auf dem Bildschirm angezeigt.

Die Ausführung dieses Arbeitsschritts kann wiederum mit einem manuell zu bedienen Tasters oder automatisiert mit einem Sensor in der Haltevorrichtung bestätigt werden. Daraufhin wird der Arbeitsplan von vorne neu gestartet, um ein weiteres Werkstück zu montieren.

### Bezugszeichen

- 10: Arbeitsplatz
- 11: Gestell
- 12: Arbeitsbereich
- 13: Leuchte
- 14: Bildschirm
- 15: vertikale Bezugsebene
- 16: Stellfuß
- 18: Lesevorrichtung

- 20: Bildprojektionsvorrichtung
- 21: erste Positionsbestimmungsvorrichtung = in Beschreibung aufnehmen
- 22: zweite Positionsbestimmungsvorrichtung

- 30: Behälteraufnahmevorrichtung
- 33: Materialbehälter
- 34: Referenzpunkt

- 40: Halteprofil
- 41: erste Behälterlaufbahn
- 42: zweite Behälterlaufbahn
- 43: Projektionsfläche

- 50: Datenanzeigeeinheit
- 51: erstes Werkzeug
- 51': erstes Werkzeug
- 52: zweites Werkzeug
- 61: erste Datenverarbeitungseinheit
- 62: zweite Datenverarbeitungseinheit
- 62': zweite Datenverarbeitungseinheit
- 63: dritte Datenverarbeitungseinheit
- 65: erstes Datentransportprotokoll
- 66: zweites Datentransportprotokoll

- 70: Arbeitsplan
- 71: Arbeitsschritt
- 71a: Arbeitsschritt erster Art
- 71b: Arbeitsschritt zweiter Art
- 72: Arbeitsanweisung
- 73: Nachricht

## Patentansprüche

1. Verfahren für einen Arbeitsplatz (10), wobei der Arbeitsplatz (10) wenigstens eine Datenanzeigeeinheit (50), ein Arbeitsbereich (12) und wenigstens ein erstes Werkzeug (51) mit einer zweiten Datenverarbeitungseinheit (62; 62') umfasst, wobei dem Arbeitsplatz (10) eine von der zweiten Datenverarbeitungseinheit (62; 62') verschiedene erste Datenverarbeitungseinheit (61) zugeordnet ist, wobei in der ersten Datenverarbeitungseinheit (61) ein Arbeitsplan (70) mit mehreren Arbeitsschritten (71) gespeichert ist, wobei diese Arbeitsschritte in einer vorgebbaren Reihenfolge ausgeführt werden, wobei der Arbeitsplan (70) wenigstens einen Arbeitsschritt erster Art (70a) umfasst, mit welchem eine für einen Menschen verständliche Arbeitsanweisung (72) auf der wenigstens einen Datenanzeigeeinheit (50) angezeigt wird,
**dadurch gekennzeichnet, dass** der Arbeitsplan (70) wenigstens einen Arbeitsschritt zweiter Art (70b) umfasst, bei dessen Ausführung eine in dem betreffenden Arbeitsschritt zweiter Art (70b) gespeicherte Nachricht (73) von der ersten Datenverarbeitungseinheit (61) an die zweite Datenverarbeitungseinheit (62; 62') übertragen wird.

2. Verfahren nach Anspruch 1,
wobei zumindest einem ersten Werkzeug (51) eine dritte Datenverarbeitungseinheit (63) zugeordnet ist, wobei die dritte Datenverarbeitungseinheit (63) mit der ersten Datenverarbeitungseinheit (61) über ein verbindungsorientiertes erstes Datentransportprotokoll (65) verbindbar ist, wobei die Nachricht (73) mittels des ersten Datentransportprotokolls (65) von der ersten Datenverarbeitungseinheit (61) an die dritte Datenverarbeitungseinheit (63) übertragen wird, wenn der der Nachricht (73) zugeordnete Arbeitsschritt zweiter Art (70b) ausgeführt wird, wobei die zweite Datenverarbeitungseinheit (62) über ein zweites Datentransportprotokoll (66) mit der dritten Datenverarbeitungseinheit (63) verbindbar ist.

3. Verfahren nach Anspruch 2,
wobei das erste Datentransportprotokoll (61) verschieden vom zweiten Datentransportprotokoll (62) ist.

4. Verfahren nach Anspruch 2 oder 3,
wobei mehrere unterschiedliche erste Werkzeuge (51) vorgesehen sind, die sich zumindest hinsichtlich des mit dem zweiten Datentransportprotokoll (66) übertragenen zweiten Nachrichtenformats unterscheiden, wobei das mit dem ersten Datentransportprotokoll (65) verwendete erste Nachrichtenformat bei allen ersten Werkzeugen (51) identisch und/oder wählbar ist.

5. Verfahren nach Anspruch 4,
wobei das erste Nachrichtenformat ein reines Textformat ist, wobei der entsprechende Text als Nachricht (73) im betreffenden Arbeitsschritt zweiter Art (70b) gespeichert ist.

6. Verfahren nach einem der Ansprüche 2 bis 5,
wobei die dritte Datenverarbeitungsvorrichtung (63) auf den Eingang einer Nachricht (73) in einem ersten Nachrichtenformat eine Nachricht in einem zweiten Nachrichtenformat erzeugt, welche im Wesentlichen einen äquivalenten Nachrichteninhalt wie die genannte Nachricht im ersten Nachrichtenformat hat, wobei sie die genannte Nachricht im zweiten Nachrichtenformat mittels des zweiten Datentransportprotokolls (66) an die zugeordnete zweite Datenverarbeitungseinheit (62) sendet.

7. Verfahren nach einem der vorstehenden Ansprüche,
wobei die im Arbeitsschritt zweiter Art (70b) gespeicherte Information die Arbeitsweise des betreffenden ersten Werkzeugs (51) bei der Durchführung des dem genannten Arbeitsschritt zweiter Art (70b) zugeordneten Arbeitsvorgangs beeinflusst.

8. Verfahren nach einem der Ansprüche 2 bis 7,
wobei die zweite Datenverarbeitungseinheit (62) nach Abschluss des einem Arbeitsschritt zweiter Art (70b) zugeordneten Arbeitsvorgangs wenigstens eine Rück-Nachricht im zweiten Nachrichtenformat mittels des zweiten Datentransportprotokolls (66) an die zugeordnete dritte Datenverarbeitungseinheit (63) sendet, wobei die dritte Datenverarbeitungseinheit (63) auf den Eingang der genannten Rück-Nachricht im zweiten Nachrichtenformt eine Nachricht im ersten Nachrichtenformat erzeugt, welche im Wesentlichen einen äquivalenten Nachrichteninhalt wie die Rück-Nachricht im zweiten Nachrichtenformat hat, wobei sie die genannte Rück-Nachricht im ersten Nachrichtenformat mittels des ersten Datentransportprotokolls (65) an die erste Datenverarbeitungseinheit (61) sendet.

9. Verfahren nach Anspruch 8,
wobei die dritte Datenverarbeitungseinheit (63) der Rück-Nachricht im ersten Nachrichtenformat eine Information hinzufügt, welche das erste Werkzeug (51) eindeutig identifiziert, welches die zugeordnete Rück-Nachricht im zweiten Nachrichtenformat gesendet hat.

10. Verfahren nach einem der vorstehenden Ansprüche 2 bis 9,
wobei die dritte Datenverarbeitungseinheit (63) von einem Mikrocontroller gebildet wird, welcher Bestandteil des ersten Werkzeugs (51) ist oder fest mit dem ersten Werkzeug (51) verbunden ist.

11. Verfahren nach einem der Ansprüche 2 bis 10,
wobei der Datenaustausch zwischen der ersten und der dritten Datenverarbeitungseinheit (61; 63) drahtlos geschieht, wobei der Datenaustausch zwischen der dritten und der zweiten Datenverarbeitungseinheit (63; 62) drahtgebunden geschieht.

12. Arbeitsplatz mit wenigstens einer Datenanzeigeeinheit (50), einem Arbeitsbereich (12) und wenigstens einem ersten Werkzeug (51), wobei das erste Werkzeug (51) eine zweite Datenverarbeitungseinheit (62) umfasst, wobei dem Arbeitsplatz (10) eine von der zweiten Datenverarbeitungseinheit (62) verschiedene erste Datenverarbeitungseinheit (61) zugeordnet ist, wobei in der ersten Datenverarbeitungseinheit (61) ein Arbeitsplan (70) mit mehreren Arbeitsschritten (71) speicherbar ist,
**dadurch gekennzeichnet, dass** die erste, die wenigstens eine zweite und gewünschtenfalls die wenigstens eine dritte Datenverarbeitungseinheit (61; 62; 63) dazu eingerichtet sind, ein Verfahren nach einem der vorstehenden Ansprüche durchzuführen.

13. Arbeitsplatz nach Anspruch 12,
wobei einem ersten Werkzeug (51) eine dritte Datenverarbeitungseinheit (63) zugeordnet ist, wobei die dritte Datenverarbeitungseinheit (63) mit der ersten Datenverarbeitungseinheit (61) über ein verbindungsorientiertes erstes Datentransportprotokoll (65) verbindbar ist, wobei die zweite Datenverarbeitungseinheit (62) über ein verbindungsorientiertes zweites Datentransportprotokoll (66) mit der dritten Datenverarbeitungseinheit (63) verbindbar ist
